# EUROPÄISCHE PATENTANMELDUNG

(11) **EP 3 376 412 A1**
(43) Veröffentlichungstag der Anmeldung: **19.09.2018**
(21) Anmeldenummer: 17161021.5
(22) Anmeldetag: 15.03.2017
(51) Int. Cl.: G06F 17/50, B29C 64/386, G05B 19/4099

(54) **VERFAHREN ZUM ERSTELLEN EINES GEOMETRIEDATENSATZES BZW. EINES ABLAUFPLANS FÜR DIE ADDITIVE HERSTELLUNG EINES WERKSTÜCKS UND COMPUTERPROGRAMMPRODUKT SOWIE DATENNETZWERK ZUR DURCHFÜHRUNG DIESES VERFAHRENS**

(71) Anmelder: Siemens Aktiengesellschaft, 80333 München (DE)
(72) Erfinder: Kiener, Christoph, 81369 München (DE); Küsters, Yves, 10829 Berlin (DE)

(57) **Zusammenfassung**

Die Erfindung betrifft ein Verfahren zum Erstellen eines Geometriedatensatzes (STL) für ein additiv herzustellendes Werkstück (20) und ein Verfahren zur Erzeugung eines Ablaufplans (PLN), mit dem eine additive Fertigungsmaschine (ADM) zur Herstellung des Werkstücks (20) betrieben werden kann. Dabei kommt ein Konstruktionsprogramm (CAD) zum Einsatz. Erfindungsgemäß ist vorgesehen, dass das Konstruktionsprogramm (CAD) über eine Schnittstelle (S1) mit Materialdatensätzen (MAT) versorgbar ist, welche herstellbare Eigenschaften von geometrischen Bereichen des herzustellenden Werkstücks (20) beinhalten. Dies vereinfacht den Konstruktionsprozess, da diese Materialeigenschaften den Bereichen des herzustellenden Werkstücks (20) direkt zugeordnet werden können. In einem Fertigungsplanungsprogramm (CAM) werden dann die für die Materialeigenschaften (MAT) erforderlichen Fertigungsparameter (PRT) berücksichtigt und an eine Anlage (ADM) zur Herstellung des Werkstücks (20) weitergegeben. In dem Materialdatenpool (MPL) können Materialeigenschaften (MAT) zusammen mit Fertigungsparametern (PRT), die auf bestimmten Maschinentypen (MTP) laufen, gemeinsam abgespeichert werden. So entsteht eine Datenbank, derer sich das Konstruktionsprogramm (CAD) und das Fertigungsplanungsprogramm (CAM) bedienen kann. Die Erfindung bezieht sich auch auf ein Computerprogramm (13), in dem das Konstruktionsprogramm (CAD) und optional auch das Fertigungsplanungsprogramm (CAM) enthalten sind, sowie ein Datennetzwerk, welches den Materialdatenpool (MPL) und zumindest das Konstruktionsprogramm (CAD) aufweist.

## Beschreibung

Die Erfindung betrifft ein Verfahren zum Erstellen eines Geometriedatensatzes für ein additiv herzustellendes Werkstück. Bei diesem Verfahren kommt ein Konstruktionsprogramm zum Einsatz (auch CAD-Programm genannt). Konstruktionsprogramme werden üblicherweise verwendet, um eine dreidimensionale Beschreibung von Werkstücken zwecks Herstellung in Form eines Geometriedatensatzes zu erhalten. Der Geometriedatensatz kann beispielsweise ein STL-File sein.

Weiterhin betrifft die Erfindung ein Verfahren zum Erstellen eines Ablaufplans für die additive Herstellung eines Werkstücks. Dieser Ablaufplan enthält einerseits einen Werkstücklagen definierenden Fertigungsdatensatz (beispielsweise ein CLI-File), wobei die Geometrie der Werkstücklagen herstellungsbedingt bestimmt werden muss und die zur Herstellung nötigen Fertigungsparameter einer additiven Herstellungsanlage berücksichtigt werden müssen.

Weiterhin betrifft die Erfindung ein Computerprogrammprodukt, in dem zumindest ein erstes Programmmodul mit einem Konstruktionsprogramm zum Erstellen eines Datensatzes für ein additiv herzustellendes Werkstück enthalten ist. Auch betrifft die Erfindung ein Datennetzwerk mit einem Computer und einem über eine erste Schnittstelle mit diesem Computer verbundenen Datenpool.

Das additive Herstellen von Werkstücken birgt die Möglichkeit, eine bedarfsgerechte Herstellung von Bauteilen zu gewährleisten. Bedarfsgerecht ist die Herstellung einerseits hinsichtlich der benötigten Stückzahl (geringe Lagerhaltung) und des intendierten Einsatzorts (Vermeidung von Transportwegen). Die Bauteile können in der gewünschten Stückzahl und in der Nähe des geplanten Einsatzorts nach Bedarf hergestellt werden. Außerdem ermöglicht die additive Herstellung von Werkstücken auch neue Gestaltungsmöglichkeiten für die Werkstücke, wobei diese einerseits fertigungsgerecht ausgelegt werden können und andererseits optimal auf den Einsatzzweck des herzustellenden Bauteils angepasst werden können. Beispielsweise ist möglich, Bauteile gleichzeitig mit einem geringen Bauteilgewicht und einer hohen mechanischen Stabilität herzustellen, indem das Bauteil zumindest teilweise als Fachwerk aus einem dreidimensionalen Raumgitter ausgebildet wird. Auch können die Fertigungsparameter bei der Herstellung des Werkstücks gezielt zur Beeinflussung der Materialeigenschaften des Werkstücks ausgenutzt werden.

Bei dem additiven Herstellen von Werkstücken gilt es, eine Vielzahl von Einflussfaktoren zu berücksichtigen. Diese lassen sich daher nicht in vollem Umfang vorhersagen. Daher ist es notwendig, für die Herstellung von Werkstücken Testläufe durchzuführen und nach einer Untersuchung des hergestellten Werkstücks eine Optimierung der additiven Herstellung durchzuführen. Hierbei handelt es sich um einen iterativen Prozess, der gegebenenfalls mehrfach durchlaufen werden muss. Es besteht daher Interesse daran, den Aufwand für diesen Optimierungsprozess gering zu halten.

Als additive Fertigungsverfahren im Sinne dieser Anmeldung sollen Verfahren verstanden werden, bei denen das Material, aus dem ein Bauteil hergestellt werden soll, dem Bauteil während der Entstehung hinzugefügt wird. Dabei entsteht das Bauteil bereits in seiner endgültigen Gestalt oder zumindest annähernd in dieser Gestalt. Das Baumaterial kann beispielsweise pulverförmig oder flüssig sein, wobei durch das additive Fertigungsverfahren das Material zur Herstellung des Bauteils chemisch oder physikalisch verfestigt wird.

Ausgangspunkt für die Durchführung eines additiven Fertigungsverfahrens ist eine Beschreibung des Werkstücks in einem Geometriedatensatz, beispielsweise als STL-File (STL steht für Standard Tessellation Language). Das STL-File enthält die dreidimensionalen Daten für eine Aufbereitung zwecks Herstellung durch das additive Fertigungsverfahren. Zukünftig können auch andere Datensatzformate verwendet werden, beispielsweise das 3D Manufacturing Format 3MD. Aus dem STL-File wird ein Fertigungsdatensatz, beispielsweise ein CLI-File (CLI steht für Common Layer Interface) erzeugt, welcher eine zum additiven Herstellen geeignete Aufbereitung der Geometrie des Werkstücks in Lagen (sog. Slices) enthält. Die Transformation der Daten wird als Slicen bezeichnet. Außerdem benötigt die Maschine weitere Vorgaben zum Herstellen, z.B. die Höhe der herzustellenden Lagen, die Ausrichtung der Schreibvektoren, also Richtung und Länge des Weges, welchen der Energiestrahl auf der Oberfläche des Pulverbettes beschreibt, und die Aufteilung der zu erzeugenden Werkstücklage in Sektoren, in denen bestimmte Verfahrensparameter gelten. Des Weiteren sind Fokusdurchmesser und Leistung des verwendeten Energiestrahls festzulegen. Das CLI-File und die Herstellungsdaten (Fertigungparameter) bestimmen zusammen einen Ablaufplan, nach dem das im STL-File beschriebene Werkstück in der Fertigungsanlage Lage für Lage additiv hergestellt werden kann.

Als Beispiele für das additive Fertigen können das selektive Lasersintern (auch SLS für Selective Laser Sintering), das Selektive Laserschmelzen (auch SLM für Slective Laser Melting), das Elektronenstrahlschmelzen (auch EBM für Electron Beam Melting), das Laserpulverauftragsschweißen (auch LMD für Laser Metal Deposition), das Kaltgasspritzen (auch GDCS für Gas Dynamic Cold Spray) genannt werden. Diese Verfahren eignen sich insbesondere zur Verarbeitung von metallischen Werkstoffen in Form von Pulvern, mit denen Konstruktionsbauteile hergestellt werden können. Weitere Beispiele sind das Aufspritzen von Bindemitteln oder Klebstoffen auf organische oder anorganische Pulverschichten (Binder Jetting) bzw. das Aufdüsen von Monomeren mit anschließender Polymerisation (Poly Jetting), welche für die Herstellung von Polymerbauteilen verwendet werden können.

Die Aufgabe der Erfindung besteht darin, ein Verfahren zum Erstellen eines Geometriedatensatzes für ein additiv herzustellendes Werkstück anzugeben, mit dem der Aufwand für die Erstellung des Geometriedatensatzes (bei der Ersterstellung und/oder bei der Korrektur aufgrund einer Analyse eines vorausgegangenen Fertigungsergebnisses) möglichst gering ausfällt. Auch ist es Aufgabe der Erfindung, ein Verfahren zum Erstellen eines Ablaufplans für das additive Herstellen von Werkstücken anzugeben, bei dem der Aufwand bei der Erstellung eines Fertigungsdatensatzes und Auswahl bzw. Bestimmung von Fertigungsparametern möglichst gering ausfällt. Außerdem ist es Aufgabe der Erfindung, ein Computerprogrammprodukt mit dem genannten Konstruktionsprogramm anzugeben, mit dem das genannte Verfahren mit möglichst geringem Aufwand durchgeführt werden kann. Zuletzt ist es Aufgabe der Erfindung, ein Datennetzwerk mit einem Computer anzugeben, der mit einem Datenpool verbunden ist, und mit dem das genannte Verfahren mit möglichst geringem Aufwand durchführbar ist.

Diese Aufgabe wird mit dem eingangs angegebenen Verfahren zum Erstellen eines Geometriedatensatzes dadurch gelöst, dass das Konstruktionsprogramm über eine erste Schnittstelle einen Materialdatensatz abruft, der in einem Materialdatenpool abgespeichert ist. Dieser Materialdatensatz enthält die Eigenschaften des additiv herzustellenden Materials, wobei zur Herstellung dieser Eigenschaften nötige Fertigungsparameter mindestens eines additiven Fertigungsprozesses in dem Materialdatenpool mit dem Materialdatensatz verknüpft sind. Mit anderen Worten wird der Materialdatensatz nicht nur durch allgemein übliche Werkstoffkennwerte eines eingesetzten Materials bestimmt, sondern erfindungsgemäß in Beziehung gesetzt mit der Möglichkeit, dass diese Materialkennwerte sich mit einem bestimmten additiven Fertigungsprozess herstellen lassen.

Dabei benötigt das Konstruktionsprogramm selbst die Fertigungsparameter nicht, sondern verarbeitet lediglich die Information, dass die Materialeigenschaften mit einem additiven Fertigungsverfahren herstellbar sind und deshalb für die Konstruktion eines Werkstücks verwendet werden können. Erfindungsgemäß werden diese Eigenschaften des herzustellenden Materials in dem Geometriedatensatz einem dreidimensionalen Bereich des Werkstücks zuordnet, in dem die Herstellung dieser Materialeigenschaften erforderlich ist. Der dreidimensionale Bereich kann das komplette Werkstück umfassen oder nur einen Teilbereich des Werkstücks betreffen. Der so erstellte Geometriedatensatz wird dann an einer zweiten Schnittstelle zur Verfügung gestellt, kann also z. B. zum Zwecke der Herstellung des Werkstücks abgerufen werden. Die zur Herstellung der Materialeigenschaften des Werkstücks erforderlichen Fertigungsparameter können zum Zwecke der Herstellung direkt aus dem Materialdatenpool abgerufen werden.

Erfindungsgemäß enthält der Materialdatenpool eine Bibliothek von herstellbaren Materialeigenschaften additiv herzustellender Materialien, die auf Erfahrungen und Untersuchungen der Vergangenheit beruhen und im Folgenden als Materialdatensätze bezeichnet werden. Bei der Konstruktion von Werkstücken mit dem Konstruktionsprogramm kann vorteilhaft auf dieses Erfahrungswissen zurückgegriffen werden, indem die additiv herstellbaren Materialeigenschaften dem herzustellenden Werkstück zugeordnet werden, und zwar in den Bereichen, in denen die Erzeugung dieser Materialeigenschaften erforderlich ist. Hierdurch wird vorteilhaft vermieden, dass bei der Konstruktion von Werkstücken Vorgaben berücksichtigt werden, die sich anschließend in der Fertigung nicht umsetzen lassen. Gleichzeitig eröffnet der Materialdatenpool die Möglichkeit, unter unterschiedlichen erzeugbaren Materialeigenschaften die für den Anwendungsfall geeignetsten auszusuchen. Die Verknüpfung der Materialeigenschaften mit zur Herstellung derselben erforderlichen Fertigungsparametern beschleunigt vorteilhaft überdies den anschließenden Optimierungsprozess für die Fertigung, da bereits im ersten Fertigungslauf für das konstruierte Werkstück mit vergleichsweise guten Ergebnissen zu rechnen ist. Hierdurch wird vorteilhaft der iterativ ablaufende Optimierungsprozess für die additive Bauteilfertigung verkürzt.

Gemäß einer vorteilhaften Ausgestaltung der Erfindung ist vorgesehen, dass der Materialdatensatz als Eigenschaften des herzustellenden Materials mindestens eines der folgenden Kriterien enthält:
1. Materialeigenschaften, die sich unterscheiden durch chemische Zusammensetzung und/oder metallurgische Eigenschaften und/oder Polymerisationsgrad,
2. Eigenschaften, die auf einer Anordnung des Materials im dreidimensionalen Raum beruhen, sowie die zugehörige Anordnung des Materials,
3. lokale Materialveränderungen im Bauteil, die durch einen Gradienten der betreffenden Eigenschaft oder einen diskontinuierlichen Übergang hervorgerufen werden.

Der Materialdatensatz kann eine oder mehrere der unter 1, 2 und 3 genannten Eigenschaften enthalten. Der Materialdatensatz ist damit geeignet, die Eigenschaften eines sogenannten digitalen funktionalen Materials zu definieren, welches in der genannten Weise einem dreidimensionalen Bereich des Werkstücks zugeordnet werden kann, um dessen Eigenschaften in dem Bereich der Zuordnung zu definieren.

Bei den unter 1. genannten Materialeigenschaften geht es um Eigenschaften des Werkstoffs selbst. Hierzu können folgende Beispiele genannt werden, die die Wahl anderer Materialeigenschaften nicht ausschließen. Unterschiedliche Farben können durch Einsatz unterschiedlicher Farbstoffe erzeugt werden. Dies ist insbesondere bei additiven Fertigungsverfahren möglich, die auf Druckprinzipien beruhen. Der Grad der Vernetzung von Polymeren kann z. B. zu einer unterschiedlichen Härte oder Elastizität des Materials führen. Weiterhin lassen sich diese Materialeigenschaften durch Einsatz unterschiedlicher Monomere oder Monomerengemische mit variablen Konzentrationsverhältnissen der verschiedenen Monomere erreichen. Bei metallischen Werkstoffen kann die Ausbildung des metallischen Gefüges durch die Fertigungsparameter beeinflusst werden. Als Materialeigenschaften können unterschiedliche metallischkristalline Strukturen in dem Materialdatensatz definiert sein. Sowohl bei Polymeren als auch bei metallischen Werkstoffen kann überdies eine Anisotropie von Materialeigenschaften abgespeichert werden, d. h., dass diese Eigenschaften in dem Werkstück in unterschiedlichen Raumrichtungen auch unterschiedlich ausgeprägt sind.

Die unter 2. aufgeführten Eigenschaften betreffen die Anordnung des Materials in dem herzustellenden Werkstück. Hierdurch können die Materialeigenschaften beeinflusst werden, wobei diese Materialeigenschaften auf den dreidimensionalen Bereich des Werkstücks bezogen werden, dem der betreffende Materialdatensatz zugeordnet wurde. Beispielsweise können verschiedene dreidimensionale Gittertypen von herzustellenden Fachwerken bestimmt und gespeichert werden. Als weitere Eigenschaft kann die Porosität des Materials berücksichtigt werden.

Wird ein Fachwerk einem dreidimensionalen Bereich des Werkstücks zugeordnet, so wird vorteilhaft in dem Konstruktionsprogramm der betreffende Bereich mit dem herzustellenden Fachwerk ausgefüllt, ohne dass im Einzelnen jede einzelne Strebe des Fachwerks geometrisch beschrieben werden muss. Vielmehr sind die Parameter für die Erstellung des betreffenden Fachwerks als Fertigungsparameter in dem Materialdatenpool abgelegt und müssen erst abgerufen werden, wenn die additive Fertigungsmaschine das Bauteil herstellen soll. Hier kann auch eine Schnittstelle für die Fertigungsplanung vorgesehen werden, damit diese Fertigungstaten bei der Erstellung des Ablaufplans für die additive Herstellung berücksichtigt wird (hierzu im Folgenden noch mehr). Der mit der Erstellung des Geometriedatensatzes verbundene Aufwand verringert sich dadurch beträchtlich, wobei gleichzeitig durch Zuordnen der betreffenden Materialeigenschaften des Fachwerks die zu erreichenden Bauteileigenschaften gut vorhergesagt werden können.

Von Bedeutung bei der Verwendung von dreidimensionalen Fachwerken ist neben den Gittertypen (beispielsweise orthorhombisch, hexagonal oder kubisch) auch die Gitterorientierung im Raum, die beispielsweise bezüglich einer Bauachse z, die senkrecht auf dem herzustellenden Lagen des Werkstücks steht, beschrieben werden kann. Die Materialeigenschaften der verschiedenen Gitter sind gewöhnlich nämlich anisotrop, so dass die Ausrichtung des Raumgitters auch die Richtungsabhängigkeit der betreffenden Materialeigenschaft (beispielsweise Streckgrenze) beeinflusst. Auch die Größe der Gitterzellen des Fachwerks sowie die Abmessungen der eingesetzten Gitterstäbe spielen eine Rolle. Als Gitterzellen sind die Elementarzellen des Gitters zu verstehen, die das Gitter beschreiben, wobei ein Zusammensetzen der Gitterzellen das Gitter ergibt.

Eine andere Materialeigenschaft stellt die Oberflächenrauheit dar, die beispielsweise durch Veränderung der Dicke der herzustellenden Lagen beeinflusst wird. Weitere Einflussfaktoren, die als Fertigungsparameter im Materialdatenpool abgespeichert werden können, um unterschiedliche Oberflächenqualitäten zu gewährleisten, sind die Leistung eines zu Verfestigung des Materials verwendeten Energiestrahls oder dessen Verfahrgeschwindigkeit. Auch können konturbildende Bereiche einer Bauteillage mit anderer Schichtdicke hergestellt werden, als Kernbereiche, um die Oberflächengüte zu verbessern. In diesem Fall wären durch das Konstruktionsprogramm als dreidimensionale Bereiche des Werkstücks ein Kern und eine Hülle zu berücksichtigen, in denen unterschiedliche Fertigungsparameter gelten und somit unterschiedliche Eigenschaften des Materials vorliegen. Dabei kann das verwendete Material selbst dasselbe sein. Dies ist ein Beispiel dafür, dass die Eigenschaften im Materialdatensatz nicht lediglich von dem verwendeten Material, sondern auch von dessen Herstellung abhängen. Eine andere Materialeigenschaft ist beispielsweise die Ausbildung einer Strukturierung auf der Oberfläche des Materials (Textur), die einer Regelmässigkeit oder einen statistisch durchschnittlichen Regelmässigkeit aus ähnlichen Mustern folgt.

Porosität mit definiertem Porenanteil kann bestimmten Bauteilbereichen (in bestimmten Volumenbereichen des Bauteils) bei Metallen auch durch Variation der Energiedichte des Energiestrahls und des Schmelzbadabstandes erzeugt werden, so dass gezielt nur schwächer verbundene Bereiche erschmolzen werden, die in nachfolgenden Bearbeitungsschritten von ungeschmolzenem Pulver befreit werden und dadurch eine gezielte Porosität aufweisen. Porosität mit identischem Porenanteil kann auch durch die Anwendung von polymerisierbaren und herauslösbaren Monomeren mit anderen additiven Fertigungstechniken erzielt werden.

Die Materialeigenschaften unter 3. sind erforderlich, um Übergänge im Bauteil zu beschreiben. Diese werden insofern durch die Veränderung einer oder mehrerer Bauteileigenschaften beschrieben. Beispielsweise kann sich eine Farbe von einem Farbton in einen anderen Farbton verändern. Die Bauteileigenschaft kann aber beispielsweise auch die Elastizität beschreiben, die sich von elastisch zu hart oder umgekehrt verändert. Bei Fachwerken können auf diese Weise Gitterübergänge beschrieben werden, die z. B. entstehen, wenn von einem Gittertyp zu einem anderen Gittertyp gewechselt wird. Dies kann durch Veränderung der Zellgröße oder durch Veränderung der Dicke der Fachwerkstreben oder durch beides erfolgen. Ein solcher Übergang entsteht auch, wenn ein Gitter an einen massiven Bauteilbereich angrenzt, da sich z. B. die mechanischen Eigenschaften am Übergang nicht abrupt ändern, sondern beide Bereiche sich mechanisch beeinflussen.

Gemäß einer weiteren Ausgestaltung der Erfindung ist vorgesehen, dass die zur Herstellung nötigen Fertigungsparameter mit Daten mindestens eines Maschinentyps, auf dem die Fertigungsparameter einstellbar sind, in dem Materialdatenpool verknüpft werden. Dies hat den Vorteil, dass die Fertigungsparameter mit einer höheren Spezifik erstellt und gespeichert werden können, wobei Besonderheiten des Maschinentyps Berücksichtigung finden können. Hierdurch ist es möglich, die Sicherheit, dass bestimmte Materialeigenschaften in einem nachfolgenden Prozess des additiven Herstellens auch tatsächlich erzeugt werden können, zu erhöhen. Auch ist es möglich, zu beurteilen, welchen Maschinentyp man zur Erreichung optimaler Ergebnisse einsetzen kann. Beispielsweise kann es erforderlich sein, das Pulverbett bei einem Verfahren eines selektiven Laserschmelzens vorzuwärmen. Vom Maschinentyp ist es nun abhängig, ob eine Vorwärmung des Pulverbetts maschinentechnisch überhaupt vorgesehen ist, und bis zu welcher Temperatur eine Vorwärmung mit dem betreffenden Maschinentyp möglich ist. Der Materialdatenpool enthält somit Informationen zu den zu erreichenden Materialeigenschaften, die aus unterschiedlichen Quellen stammen können. Beispielsweise können die Hersteller der additiven Fertigungsanlagen Daten unterschiedlicher Maschinentypen zur Verfügung stellen. Materialhersteller können Werkstoffparameter der angebotenen Fertigungsmaterialien zur Verfügung stellen, von denen einige unabhängig von den gewählten Fertigungsparametern sind (beispielsweise Schmelztemperatur eines metallischen Pulvers). Zuletzt können Anwender ihr Erfahrungen im Materialdatenpool zur Verfügung stellen, die bei der Konstruktion von Bauteilen entstehen und für die Zuordnung zu dreidimensionalen Bauteilbereichen verallgemeinert werden können.

Gemäß einer weiteren Ausgestaltung der Erfindung ist vorgesehen, dass über die erste Schnittstelle der Materialdatensatz und die Fertigungsparameter mindestens eines additiven Fertigungsverfahrens aus dem Materialdatenpool gemeinsam abgerufen werden. Alternativ können diese gemäß einer anderen Ausgestaltung der Erfindung auch später abgerufen werden (hierzu im Folgenden noch mehr). Die Berücksichtigung der Fertigungsparameter schon während der Erstellung des Geometriedatensatzes im Konstruktionsprogramm hat den Vorteil, dass bereits in der Entstehungsphase der Bauteilbeschreibung berücksichtigt werden kann, welche Fertigungsparameter für die Realisierung notwendig sein werden. Dies schränkt beispielsweise die Wahl einer geeigneten additiven Fertigungsmaschine ein, wenn nicht alle Fertigungsmaschinen die notwendigen Fertigungsparameter nicht zur Verfügung stellen können. Damit kann beispielsweise in einer frühen Phase der Konstruktion entschieden werden, ob ein Bauteil mit Fertigungsmaschinen hergestellt werden kann, die beim Anwender zur Verfügung stehen oder ob die Fertigung bei einem Teilehersteller im Auftrag gegeben werden muss, welcher über die notwendigen additiven Fertigungsmaschinen verfügt.

Die eingangs angegebene Aufgabe wird erfindungsgemäß auch durch ein Verfahren zum Erstellen eines Ablaufplans für die additive Herstellung eines Werkstücks gelöst. Der Ablaufplan enthält einen Werkstücklagen (Slices) definierenden Fertigungsdatensatz und zur Herstellung nötige Fertigungsparameter. Die Lösung der Aufgabe gelingt dadurch, dass das vorstehend beschriebene Verfahren zum Erstellen eines Geometriedatensatzes für ein additiv herzustellendes Werkstück Anwendung findet. Der Geometriedatensatz wird über die zweite Schnittstelle an ein Fertigungsplanungsprogramm übertragen, welches den Ablaufplan erstellt. Der Ablaufplan wird dann an einer dritten Schnittstelle zur Verfügung gestellt und kann dort beispielsweise durch eine geeignete additive Fertigungsmaschine abgerufen werden.

Das erfindungsgemäße Verfahren zum Erstellen eines Ablaufplans ermöglicht es vorteilhaft, das vorstehend beschriebene Verfahren zum Erstellen eines Geometriedatensatzes für ein additiv herzustellendes Werkstück in einen Prozess der Fertigungsvorbereitung einzubetten, an dessen Ende ein Ablaufplan für die additive Herstellung eines Werkstücks steht. Das Fertigungsplanungsprogramm sowie das Konstruktionsprogramm können hierbei auch eine Einheit bilden, so dass die zweite Schnittstelle S2 nicht physikalisch vorliegt, sondern durch eine Übergabe der Daten vom Konstruktionsmodul zum Fertigungsmodul des Programms realisiert ist.

Gemäß einer vorteilhaften Ausgestaltung des letztgenannten Verfahrens ist vorgesehen, dass das Fertigungsplanungsprogramm über eine vierte Schnittstelle Fertigungsparameter zur Herstellung des Werkstücks von dem Materialdatenpool bezieht und bei der Erstellung des Ablaufplanes berücksichtigt. Die Berücksichtigung erfolgt dadurch, dass die verwendeten Fertigungsparameter mit dem das Werkstück beschreibende Fertigungsdatensatz verknüpft werden. Werden in dem Bauteil Bauteilbereiche mit unterschiedlichen Materialeigenschaften hergestellt, so sind in diesen Bereichen auch unterschiedliche Fertigungsparameter zu berücksichtigen. Alternativ können diese Fertigungsparameter, wie bereits erwähnt, auch schon im Konstruktionsprogramm berücksichtigt und über die zweite Schnittstelle an das Fertigungsplanungsprogramm weitergegeben werden. Spätestens während des Ablaufs des Fertigungsplanungsprogramms sind die Fertigungsparameter als Bestandteil des Ablaufplans zu berücksichtigen (unabhängig davon, ob diese über die zweite Schnittstelle oder die vierte Schnittstelle bezogen wurden).

Gemäß einer anderen Ausgestaltung des letztgenannten Verfahrens ist vorgesehen, dass die Fertigungsparameter mit Daten mindestens eines Maschinentyps, auf dem die Fertigungsparameter einstellbar sind, in dem Materialdatenpool verknüpft sind. Die Maschinentypen, mit denen bestimmte Fertigungsparameter erzeugbar sind, können beispielsweise durch einen Anlagenhersteller von additiven Fertigungsmaschinen in den Materialdatenpool eingespeist werden. Dies erleichtert die Auswahl geeigneter Fertigungsparameter unter Berücksichtigung der einem Anwender zur Verfügung stehenden additiven Fertigungsmaschinen. Sollte dieser Anwender die Fertigungsmaschine nicht selbst besitzen, kann er durch Kenntnis von für die Herstellung seines Anwendungsfalls geeigneten Maschinentypen einen Teilehersteller auswählen, der den betreffenden Maschinentyp im Einsatz hat. Die Daten des Maschinentyps können beispielsweise auch den Kontakt des Anlagenherstellers oder den Kontakt von Teileherstellern enthalten, die diesen Maschinentyp einsetzen. Dies erleichtert für den Anwender die Kontaktaufnahme.

Die Daten des Maschinentyps können auch Informationen über das Format enthalten, in dem der Ablaufplan für die betreffende Maschine zu erstellen ist. Die betreffende additive Fertigungsmaschine kann dann direkt mit dem im Fertigungsplanungsprogramm erstellten Ablaufplan angesteuert werden, ohne dass weitere Modifikationen erforderlich sind.

Besonders vorteilhaft ist es, wenn der Ablaufplan auch Fertigungsparameter für eine dem additiven Verfahren nachgelagerte Nachbehandlung enthält. Hierdurch ist es möglich, auch Materialeigenschaften im Materialdatenpool abzuspeichern, welche sich nicht direkt durch eine additive Fertigung des Bauteils herstellen lassen, sondern erst im Rahmen einer Nachbehandlung des Bauteils erzeugbar sind. Diese Nachbehandlung kann beispielsweise in einer Wärmebehandlung oder einer Oberflächenbearbeitung des additiv hergestellten Bauteils bestehen. Durch eine Wärmebehandlung lassen sich vorzugsweise die Gefügeeigenschaften in dem Werkstück beeinflussen. Eine Oberflächenbehandlung kann vorzugsweise helfen, die Oberflächengüte des additiv hergestellten Bauteils zu verbessern (beispielsweise durch Eliminierung des sogenannten Treppeneffekts bei schräg zu den Bauteillagen ausgerichteten Oberflächen des Werkstücks).

Eine Nachbehandlung kann wahlweise in der additiven Fertigungsmaschine selbst oder in einer anderen Einrichtung erfolgen. Eine Wärmebehandlung lässt sich beispielsweise in einem Ofen durchführen. Wenn die Maschine zur Nachbehandlung nicht als Teil der additiven Fertigungsmaschine ausgeführt ist, so muss diese selbstverständlich derart in das Datennetz integriert sein, dass die Fertigungsparameter für die Nachbehandlung an diese Maschine übergeben werden können.

Die eingangs angegebene Aufgabe wird auch durch ein Computerprogrammprodukt gelöst, welches zumindest ein erstes Programmmodul mit einem Konstruktionsprogramm zum Erstellen eines Geometriedatensatzes für ein additiv herzustellendes Werkstück aufweist. Das Computerprogrammprodukt ist damit erfindungsgemäß dazu geeignet, eines der oben angegeben Verfahren bei der Durchführung zu unterstützen. Hierzu ist vorgesehen, dass das erste Programmmodul eine erste Schnittstelle zur Eingabe eines Materialdatensatz aufweist, wobei der Materialdatensatz die Eigenschaften des additiv herzustellenden Materials aufweist. Außerdem ist eine zweite Schnittstelle zur Ausgabe des Geometriedatensatz vorgesehen. Mit dem Konstruktionsprogramm sind die Eigenschaften des herzustellenden Materials in dem Geometriedatensatz einem dreidimensionalen Bereich des Werkstücks zuordenbar. Die Kenntnis dieser Eigenschaft ermöglicht es vorteilhaft, das oben genannte Verfahren zum Erstellen des Geometriedatensatzes zu unterstützen. Hiermit werden die im Zusammenhang mit dem Verfahren genannten Vorteile erreicht.

Gemäß einer Ausgestaltung des Computerprogrammprodukts ist vorgesehen, dass die erste Schnittstelle auch zur Eingabe von für die Herstellung des Werkstücks nötigen Fertigungsparametern vorgesehen ist. Auch diese können damit beim Ablaufen des durch das Computerprogrammprodukt realisierten Computerprogramms verarbeitet werden, um, wie bereits erläutert, zur Herstellung des Werkstücks nötige Fertigungsparameter möglichst bereits in einem frühen Stadium berücksichtigen zu können.

Gemäß einer weiteren Ausgestaltung des Computerprogrammprodukts ist vorgesehen, dass ein zweites Programmmodul mit einem Fertigungsplanungsprogramm vorgesehen ist, mit dem ein Ablaufplan für die additive Herstellung eines Werkstücks erstellbar ist. Dieser Ablaufplan enthält einen Werkstücklagen definierenden Fertigungsdatensatz und zur Herstellung nötige Fertigungsparameter. Damit das zweite Programmmodul in dem Computerprogrammprodukt mit dem ersten Programmmodul kommunizieren kann, sind das erste und das zweite Programmmodul über die zweite Schnittstelle miteinander verbunden. Dabei kann das Computerprogrammprodukt auf einem oder auf mehreren Computern laufen. Das Computerprogrammprodukt weist überdies eine dritte Schnittstelle zur Ausgabe des Ablaufplans auf.

Bei der Verwendung des Computerprogrammprodukts werden die vorstehend bereits im Zusammenhang mit dem Verfahren zum Erstellen eines Ablaufplans geschilderten Vorteile erreicht.

Vorteilhaft kann in dem zweiten Programmmodul eine vierte Schnittstelle zur Eingabe von für die Herstellung des Werkstücks nötigen Fertigungsparametern vorgesehen sein. Dies ist erforderlich, wenn diese Fertigungsparameter bereits durch das erste Programmmodul über die zweite Schnittstelle an das zweite Programmmodul übergeben werden. Spätestens im zweiten Programmmodul müssen zur Erstellung des Ablaufplans nämlich auch die zur Herstellung des Werkstücks notwendigen Fertigungsparameter berücksichtigt werden, wobei diese über die dritte Schnittstelle an eine additive Fertigungsmaschine übergeben werden können.

Zuletzt wird die eingangs angegebene Aufgabe auch durch ein Datennetzwerk mit einem Computer und einem über eine erste Schnittstelle mit dem Computer verbundenen Datenpool gelöst. Erfindungsgemäß ist vorgesehen, dass auf dem Computer ein Computerprogrammprodukt installiert ist, wie dieses vorstehend bereits beschrieben wurde. Der Datenpool ist erfindungsgemäß als Materialdatenpool mit Materialdatensätzen ausgeführt, wobei die Materialdatensätze die Eigenschaften von additiv herzustellenden Materialien enthalten und wobei zur Herstellung dieser Eigenschaften nötige Fertigungsparameter von additiven Fertigungsprozessen in dem Materialdatenpool mit den Materialdatensätzen verknüpft sind. Außerdem sind der Computer und der Materialdatenpool über eine erste Schnittstelle miteinander verbunden, so dass in dem Fertigungsnetzwerk mittels dem Computerprogrammprodukt das eingangs angegebene Verfahren zum Erstellen eines Geometriedatensatzes für einen additiv herzustellendes Werkstück durchgeführt werden kann.

Dies ist mit den oben bereits angeführten Vorteilen verbunden, dass mit vergleichsweise wenig Aufwand vergleichsweise seriennahe Geometriedatensätze unter Berücksichtigung der durch mögliche Fertigungsparameter vorgegebenen Limitierungen erstellt werden können. Im Kern enthält das Datennetzwerk insoweit die Komponenten, die zur Erreichung dieses Ergebnisses erforderlich sind, nämlich einen Computer, auf dem das eingangs angegebene Verfahren ablaufen kann (in dem hierfür vorgesehenen Computerprogrammprodukt) und den Materialdatenpool, dessen Daten über die erste Schnittstelle durch den Computer verarbeitet werden können. Das Datennetzwerk kann, wie im Folgenden näher erläutert werden soll, vorteilhaft durch weitere Komponenten ergänzt werden, die einen Betrieb vereinfachen bzw. beschleunigen.

Gemäß einer Ausgestaltung des Datennetzwerks ist vorgesehen, dass der Materialdatenpool über eine fünfte Schnittstelle mit einem dritten Programmmodul, aufweisend ein Simulationsprogramm, verbunden ist, wobei mit dem Simulationsprogramm die Eigenschaften von Materialdatensätzen oder von im Konstruktionsprogramm erstellten Bauteilen simulierbar sind. Dabei kann das dritte Programmmodul und die fünfte Schnittstelle Teil des Computers sein, auf dem das Computerprogrammprodukt läuft. Auch kann das dritte Programmmodul in das besagte Computerprogrammprodukt integriert sein. Möglich ist es aber auch, dass das dritte Programmmodul auf einem anderen Computer läuft, wobei die fünfte Schnittstelle dann physikalisch ausgebildet ist und die beiden Computer miteinander verbindet.

Der Vorteil einer Verwendung des dritten Programmmoduls mit dem Simulationsprogramm liegt darin, dass berechnete Werkstücke daraufhin untersucht werden können, ob diese das geforderte Anforderungsprofil erfüllen. Trotz des in der Materialdatenbank abgerufenen Wissens sind die genauen Eigenschaften des zu erzeugenden Werkstücks nicht mit absoluter Sicherheit vorhersagbar. Hierbei kann ein Simulationsprogramm helfen, mit dem beispielsweise durch eine Finite-Elemente-Methode mechanische Eigenschaften des zu erzeugenden Werkstücks berechnet werden. Für eine Kommunikation zwischen Konstruktionsprogramm und Simulationsprogramm kann eine zwölfte Schnittstelle vorgesehen werden.

Über die fünfte Schnittstelle kommuniziert das Simulationsprogramm mit dem Materialdatenpool. Die Simulation kann hinsichtlich des Berechnungsaufwands vorteilhaft verringert werden, indem Materialdaten aus dem Materialdatenpool direkt übernommen werden. Außerdem können Simulationsergebnisse in der Materialdatenbank abgespeichert werden. Diese Simulationsergebnisse können beispielsweise Berechnungsergebnisse sein, die bestimmte Materialien, für die noch keine Materialdaten aus der praktischen Fertigung vorliegen, betreffen. Diese können dann in den Materialdatenpool aufgenommen werden, wobei bei anschließender Verwendung dieser Materialeigenschaften fertigungsbezogene Daten (z. B. Fertigungsparameter) hinzukommen können und auch in dem Materialdatenpool abgespeichert werden können.

Gemäß einer anderen Ausgestaltung des Datennetzwerks ist vorgesehen, dass der Materialdatenpool eine sechste Schnittstelle für Daten von Maschinentypen aufweist. Über die sechste Schnittstelle können beispielsweise Hersteller von additiven Fertigungsmaschinen mit dem Materialdatenpool kommunizieren, damit die Daten in dem Materialdatenpool, die Fertigungsparameter enthalten, mit Daten derjenigen Maschinentypen verknüpft werden können, mit denen diese Fertigungsparameter erreichbar sind und die der Anlagenhersteller im Produktprogramm hat. Auf diese Weise fällt es einem Anwender vorteilhaft leichter, geeignete Maschinentypen bzw. die Hersteller dieser Maschinentypen ausfindig zu machen.

Weiterhin kann vorteilhaft auch vorgesehen werden, dass der Materialdatenpool eine siebente Schnittstelle für Materialdatensätze aufweist. Über diese Schnittstelle können beispielsweise Materialhersteller die Materialdaten ihrer angebotenen Materialien in den Materialdatenpool einstellen. Diese Daten beinhalten auf jeden Fall grundsätzliche Werkstoffkennwerte der Materialien und können in Abhängigkeit von konstruktiven Details, beispielsweise der Ausbildung des Materials als Stützgitter, mit weiteren Kennwerten ergänzt werden. Diese Kennwerte können aus Messungen nach der Herstellung von Bauteilen, einer Simulation von Materialien mittels des Simulationsprogramms oder aus Berechnungen von mittels des Konstruktionsprogramms erstellten Werkstückdaten berechnet werden.

Gemäß einer besonderen Ausgestaltung des Datennetzwerks kann vorgesehen werden, dass der Materialdatenpool einen für alle vorgesehenen Nutzer frei zugänglichen Bereich für Daten und einen oder mehrere Bereiche mit vergebbaren Zugangsrechten für Daten aufweist. Dieser Bereich kann beispielsweise durch eine Firewall vor unautorisiertem Zugriff geschützt werden. Die Daten, die in diesem Bereich abgelegt werden, können durch dessen Urheber im Zugang beschränkt werden. Auf diese Weise können beispielsweise Materialdaten, die zum Firmen-Knowhow eines Anwenders gehören, geschützt werden. Zugangsrechte können gezielt denjenigen Geschäftspartnern zugeteilt werden, die diese benötigen. Beispielsweise kann es sich bei dem Geschäftspartner um einen Teilehersteller handeln, der ein bestimmtes Bauteil im Auftrag des Anwenders herstellen soll. Eine andere Möglichkeit besteht darin, Materialhersteller mit den gewünschten Materialdaten zu versorgen, damit dieser ein geeignetes Material zur Verfügung stellen kann. Möglich ist es auch, die Materialdaten an Anlagenhersteller weiterzugeben, damit diese die Herstellbarkeit eines bestimmten Werkstücks auf ihren Fertigungsmaschinen prüfen, wenn die Materialdatenbank bisher keine geeigneten Prozessparameter für ein bestimmtes Werkstück zur Verfügung stellt.

Weitere Einzelheiten der Erfindung werden nachfolgend anhand der Zeichnung beschrieben. Gleiche oder sich entsprechende Zeichnungselemente sind jeweils mit den gleichen Bezugszeichen benannt und werden nur insoweit mehrfach erläutert, wie sich Unterschiede zwischen den einzelnen Figuren ergeben. Es zeigen:
- Figur 1: ein Ausführungsbeispiel des erfindungsgemäßen Datennetzwerks mit einem Ausführungsbeispiel des erfindungsgemäßen Computerprogrammprodukts, wobei Ausführungsbeispiele des erfindungsgemäßen Verfahrens in dem Datennetzwerk ausführbar sind, schematisch und
- Figur 2 und 3: Modifikationen des Ausführungsbeispiels gemäß Figur 1, bei denen das Datennetzwerk auf verschiedene Weise unter beteiligten Geschäftspartnern aufgeteilt ist, schematisch.

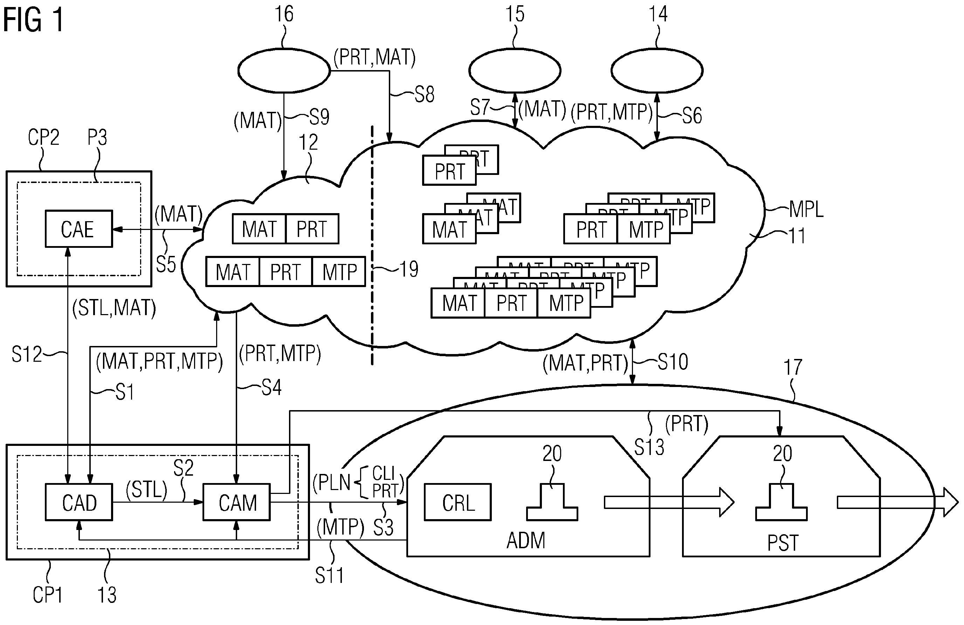

In Figur 1 ist ein Materialdatenpool MPL dargestellt, der durch eine Firewall 19 in einen Bereich 11, der für alle Beteiligten 14, 15, 16, 17 frei zugänglich ist, und einen Bereich 12, in dem Daten mit beschränkten Zugangsrechten gespeichert werden können, unterteilt ist. Auf dieses Weise ist es möglich, dass beispielsweise Anwender 16 Daten bezüglich ihrer additiv herzustellenden Produkte nur denjenigen Geschäftspartnern zur Verfügung stellen, die diese zur Abwicklung eines Auftrags benötigen. Dies könnte beispielsweise ein Teilehersteller 17 sein, während ein Anlagenhersteller 14 oder ein Materialhersteller 15 diese Daten nicht brauchen. Als Anwender 16 ist damit eine Geschäftseinheit zu verstehen, die an der Konstruktion und/oder Herstellung von Werkstücken mittels additiver Fertigung interessiert ist.

In der Materialdatenbank MPL werden Materialdatensätze MAT abgespeichert. Diese Materialdatensätze enthalten die Eigenschaften von additiv hergestellten Strukturen, die in geometrischen Teilbereichen von additiv hergestellten Werkstücken 20 ausgebildet sein können. Dies kann beispielsweise ein Vollmaterial sein, oder auch eine Gitterstruktur. Weiterhin kann das Material mit einer bestimmten Porosität hergestellt werden. Die Materialdatensätze MAT enthalten selbstverständlich auch die Werkstoffkennwerte des verwendeten Materials. Außerdem können weitere Eigenschaften, beispielsweise magnetische Eigenschaften oder andere physikalische Eigenschaften in den Materialdatensätzen MAT abgespeichert sein. Weiter sind Informationen abspeicherbar, die mit einer eventuellen Nachbehandlung in einer Nachbehandlungsanlage PST des Werkstücks einhergehen, nachdem dieses in einer additiven Fertigungsmaschine ADM gefertigt wurde.

Die Materialdatensätze MAT können weiterhin mit Fertigungsparametern PRT verknüpft sein, welche zur Herstellung der im Materialdatensatz MAT abgelegten Materialeigenschaften erforderlich ist. Hierbei kann es sich auch um mehrere unterschiedliche Fertigungsparameter handeln, welche beispielsweies durch unterschiedliche additive Fertigungsverfahren bereitgestellt werden können. Beispielsweise könnte ein Metallteil alternativ durch Elektronenstrahlschmelzen (EBM) oder selektives Laserschmelzen (SLM) gefertigt werden, wobei unterschiedliche Fertigungsparameter erforderlich sind.
Es können auch gleiche einzelne Eigenschaften in unterschiedlichen Legierungen abgebildet werden; beispielsweise kann die gleiche Porosität in einer Edelstahl-, Nickel-, Titan- oder Aluminiumlegierung auf einer Laserstrahlschmelzanlage erzeugt werden, dabei aber jeweils mit unterschiedlichen Laser- und Maschinenparametern (Schichtdicke, Geschwindigkeit, Energieeintrag, Strahlabstand).

Außerdem können die Fertigungsparameter PRT auch in Abhängigkeit des verwendeten Maschinentyps MTP unterschiedlich sein. Deswegen ist es den Anlagenherstellern 14 von additiven Fertigungsanlagen ADM möglich, über eine sechste Schnittstelle S6 Angaben über mögliche Fertigungsparameter PRT mit Daten von Maschinentypen MTP zu verknüpfen und diese im Materialdatenpool MPL zur Verfügung zu stellen. Weiterhin können Datensätze erzeugt werden, bei denen herstellbare Materialdatensätze jeweils mit den zugehörigen Fertigungsparametern PRT und den zur Herstellung geeigneten Maschinentypen MTP verknüpft sind.

Der Materialhersteller 15 kann über eine siebente Schnittstelle S7 Materialdatensätze MAT zur Verfügung stellen. Eine Verknüpfung derselben mit zugehörigen Fertigungsparametern PRT und eventuell eine Ergänzung der Materialdatensätze MAT erfolgt in Abhängigkeit vom verfügbaren Know-how durch die beteiligten Geschäftspartner 14, 15, 16, 17. Beispielsweise kann ein Teilehersteller 17 über eine zehnte Schnittstelle S10 Probleme bei der Herstellung bestimmter Strukturen als Know-how über in den Materialdatenpool MPL einspeisen, indem ein Materialdatensatz MAT mit modifizierten Fertigungsparametern PRT erzeugt wird. Ein Anwender 16 kann aufgrund seiner Konstruktionsarbeit oder der Herstellung von Mustern bestimmte Fertigungsparameter PRT für bestimmte Materialdatensätze MAT zur Verfügung stellen. Dabei kann der Anwender 16 wahlweise eine achte Schnittstelle S8 oder eine neunte Schnittstelle S9 wählen, um diese Erkenntnisse entweder allen Anwendern zugänglich zu machen (im Bereich 11) oder den Zugriff zu begrenzen (im Bereich 12). Dies gilt selbstverständlich auch für die Anlagenhersteller 14, die Materialhersteller 15 und die Teilehersteller 17, auch wenn entsprechende Schnittstellen in Figur 1 nicht gesondert dargestellt sind.

Um neue Materialdatensätze MAT zu erzeugen, kann beispielsweise derart vorgegangen werden, dass additiv herzustellende Materialstrukturen in einem Konstruktionsprogramm CAD erstellt werden und über eine zwölfte Schnittstelle S12 an ein Simulationsprogramm CAE übergeben werden. Hier können die Materialeigenschaften simuliert werden und über eine fünfte Schnittstelle S5 ein Informationsaustausch mit dem Materialdatenpool MPL erfolgen. Einerseits können Materialdatensätze MAT in den Materialdatenpool MPL eingespeist werden, andererseits kann eine Verknüpfung mit verfügbaren Fertigungsparametern PRT erfolgen, die zur Herstellung der im Materialdatensatz MAT abgespeicherten Materialeigenschaften geeignet ist. Hierbei kann sowohl das Know-how der Materialhersteller 15 als auch das Know-how der Anlagenhersteller 14 genutzt werden. Eventuell müssen diese Hersteller 14, 15 neue Materialien für das additive Herstellen oder verfügbare Materialien für diese Verwendung freigeben oder prüfen, ob additive Fertigungsmaschinen geeignete Fertigungsparameter PRT zur Verfügung stellen können (neue Prozessfenster). In Verbindung der Informationen von Schnittstelle S12 und Schnittstelle S5 kann auch die Simulation der Bauteileigenschaften als Optimierung ausgeführt werden, so dass für ein bestimmtes Material die entsprechenden geometrischen Eigenschaften wie Schichtdicke oder Materialeigenschaften wie Festigkeit, Porosität, Elastizität, etc. mit dem Simulationsprogramm CAE gezielt bestimmt werden und dann an das Konstruktionsprogramm CAD oder das Fertigungsplanungsprogramm CAM zurückgegeben wird.

Das Konstruktionsprogramm CAD ist gemeinsam mit einem Fertigungsplanungsprogramm CAM in einem Computerprogrammprodukt 13 verwirklicht, welches auf einem ersten Computer CP1 installiert ist. Das Simulationsprogramm CAE bildet ein drittes Programmmodul P3, welches auf einem zweiten Computer CP2 installiert ist. Auch das Konstruktionsprogramm CAD und das Fertigungsplanungsprogramm CAM bildet zwei nicht näher dargestellte Programmmodule, welche über eine zweite Schnittstelle S2 verbunden sind. Diese Konfiguration gemäß Figur 1 ist lediglich beispielhaft. Das Computerprogrammprodukt 13 kann auch in nicht dargestellter Weise auf mehreren Computern installiert sein, wobei die zweite Schnittstelle S2 dann eine Schnittstelle zwischen diesen Computern darstellt. Auch kann das Simulationsprogramm CAE ebenfalls im ersten Computer CP1 installiert sein. Beliebige andere Konfigurationen sind möglich, wobei eine Kommunikation der einzelnen oben genannten Programmmodule über die genannten Schnittstellen sichergestellt ist.

Bei einer neuen Konstruktionsaufgabe kommt zunächst das Konstruktionsprogramm CAD zum Einsatz. Dieses kann über eine erste Schnittstelle S1 Materialdatensätze MAT und optional auch Fertigungsdatensätze PRT und Maschinentypen MTP, mit denen diese Fertigungsparameter PRT erzeugbar sind, abrufen. Hierdurch wird die Entscheidung erleichtert, welche Materialdatensätze MAT im Hinblick auf eine Verfügbarkeit zugehöriger Fertigungsparameter PRT zum Einsatz kommen können.

Im Konstruktionsprogramm CAD werden die Materialeigenschaften aus dem Materialdatensatz MAT bereichsweise den dreidimensionalen Modellen eines herzustellenden Werkstücks 20 zugeordnet. Dadurch wird definiert, welche Fertigungsparameter PRT zur Herstellung der betreffenden geometrischen Bauteilbereiche erforderlich sind, ohne dass die geometrische Struktur der Werkstückbereiche im Einzelnen definiert werden muss. In besonderem Maße profitiert beispielsweise ein im Konstruktionsprogramm CAD erstellter Geometriedatensatz STL dann, wenn in einem Werkstückbereich ein dreidimensionales Versteifungsgitter mit bekannter Zellengeometrie erzeugt werden soll. Dieses muss nicht Strebe für Strebe programmiert werden, sondern ein Raumgittermaterial mit entsprechenden im Materialdatensatz MAT definierten Materialeigenschaften wird dem Hohlraum des Werkstücks, welches mit dem Raumgitter ausgefüllt werden soll, zugeordnet. In gleicher Weise lassen sich auch andere geometrische Bereiche des Werkstücks definieren, beispielsweise poröse Teilbereiche oder massive Teilbereiche, die die Wandungen des Werkstücks ergeben sollen.

Optional kann der erstellte Geometriedatensatz STL auch durch das Simulationsprogramm CAE (zwölfte Schnittstelle S12) untersucht werden, um Vorhersagen treffen zu können, ob das Werkstück die erforderlichen Eigenschaften aufweisen wird. Alternativ kann der Geometriedatensatz STL über die zweite Schnittstelle S2 auch an das Fertigungsplanungsprogramm CAM weitergegeben werden. Dieses bezieht über eine vierte Schnittstelle S4, wenn erforderlich, notwendige Fertigungsparameter PRT in Abhängigkeit des zum Einsatz kommenden Maschinentyps MTP. Der Maschinentyp MTP, der beispielsweise bei einem Teilehersteller zur Verfügung steht, kann über eine elfte Schnittstelle S11 sowohl an das Konstruktionsprogramm CAD als auch an das Fertigungsplanungsprogramm CAM übergeben werden.

Das Fertigungsplanungsprogramm CAM generiert einen Ablaufplan PLN, der an eine Steuerung CRL der additiven Fertigungsmaschine ADM gegeben wird. Dieser Ablaufplan enthält einerseits einen Fertigungsdatensatz CLI, der zur Herstellung des Werkstücks dieses in einzelnen herzustellenden Werkstücklagen (Slices) beschreibt. Außerdem sind in dem Ablaufplan PLN die zur Herstellung nötigen Fertigungsparameter PRT enthalten, welche von dem Materialpool MPL bezogen wurden. Diese passen aufgrund der durch die additive Fertigungsmaschine ADM zur Verfügung gestellten Information zum Maschinentyp MTP zu der additiven Fertigungsmaschine ADM, die im Ausführungsbeispiel gemäß Figur 1 durch den Teilehersteller 17 betrieben wird.

Das Werkstück 20 kann nach dessen Fertigung in der additiven Fertigungsmaschine ADM in einer Maschine zur Nachbehandlung des Werkstücks 20, der Nachbehandlungsanlage PST, nachbehandelt werden, um die in dem Materialdatensatz MAT abgespeicherten Eigenschaften zu erlangen. Die hierzu notendigen Fertigungsparameter PRT können durch das Fertigungsplanungsprogramm CAM über eine dreizehnte Schnittstelle S13 direkt an die Nachbehandlungsanlage PST übertragen werden.

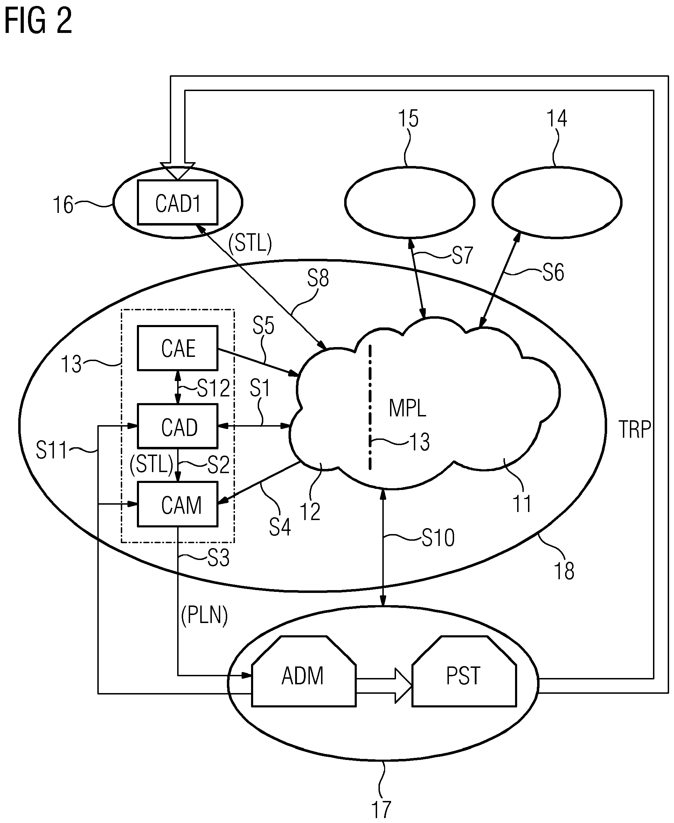

In Figur 2 ist eine von Figur 1 abweichende Konfiguration dargestellt, wie die einzelnen Komponenten des Datennetzwerks auf verschiedene Geschäftspartner 14, 15, 16, 17, 18 verteilt werden können. Während in Figur 1 offen ist, wo die Programmmodule mit dem Konstruktionsprogramm CAD, dem Fertigungsplanungsprogramm CAM und dem Modulationsprogramm CAE lokalisiert sind, wird in Figur 2 diesbezüglich eine Variante dargestellt. Hier gibt es einen Serviceanbieter 18, der den Materialdatenpool MPL betreibt und der ein Computerprogrammprodukt 13 einsetzt, in dem das Konstruktionsprogramm CAD, das Fertigungsplanungsprogramm CAM und das Simulationsprogramm CAE abläuft. Der Serviceanbieter kann seinen Service beispielsweise einem Anwender 16 anbieten, der ein eigenes Konstruktionsprogramm CAD1 betreibt und hiermit einen Geometriedatensatz STL erzeugt. Dieser kann über die achte Schnittstelle S8 an den Serviceanbieter 18 gesendet werden, wobei sich das Konstruktionsprogramm CAD1 der Materialdatensätze MAT, Fertigungsparameter PRT und Maschinentypen MTP aus dem Materialdatenpool MPL bedient (in Figur 2 nicht näher dargestellt, siehe Figur 1). Der Serviceanbieter erstellt unter Einsatz des Fertigungsplanungsprogramms CAM einen Ablaufplan PLM, der über die dritte Schnittstelle S3 einem Teilehersteller 17 zur Verfügung gestellt wird. Alternativ könnte der Teilehersteller 17 den Druckauftrag über die zehnte Schnittstelle S10 auch aus dem Materialdatenpool MPL abrufen, wo dieser durch den Serviceanbieter vorher eingestellt wurde (nicht dargestellt). Dieser stellt mit seiner additiven Fertigungsanlage ADM und eventuell seiner Nachbehandlungsanlage PST das Werkstück her und liefert dieses über einen Transportweg TRP an den Anwender 16.

Auch andere Konfigurationen ausgehend von der in Figur 2 dargestellten sind denkbar. Beispielsweise kann der Anwender 16 auch die Erstellung des Geometriedatensatzes STL dem Serviceanbieter 18 überlassen. Dabei kann dieser Beratungsleistungen an den Anwender 16 verkaufen. Mit dem Konstruktionsprogramm CAD1 des Anwenders kann eine Festlegung der Geometrie des herzustellenden Werkstücks auch ohne Berücksichtigung des Materialdatenpools MPL erfolgen, so dass diese Teilleistung der Erstellung des Geometriedatensatzes noch beim Anwender erfolgt und eine Zuordnung der Materialdatensätze MAT in dem Konstruktionsprogramm CAD beim Serviceanbieter 18 liegt. Der Serviceanbieter kann selbst auch additive Fertigungsanlagen ADM oder Nachbehandlungsanlagen PST betreiben, so dass dieser auch die Funktion des Teileherstellers 17 übernimmt. Gleichzeitig kann er im Rahmen einer Erweiterung seiner Materialdatenbank MPL mit den Materialherstellern 15 und den Anlagenherstellern der additiven Fertigungsmaschinen 14 zusammenarbeiten. Auch eine Zusammenarbeit mit Teileherstellern 17 ist möglich. Hierzu werden die sechste Schnittstelle S6, die siebente Schnittstelle S7 und die zehnte Schnittstelle S10 benötigt.

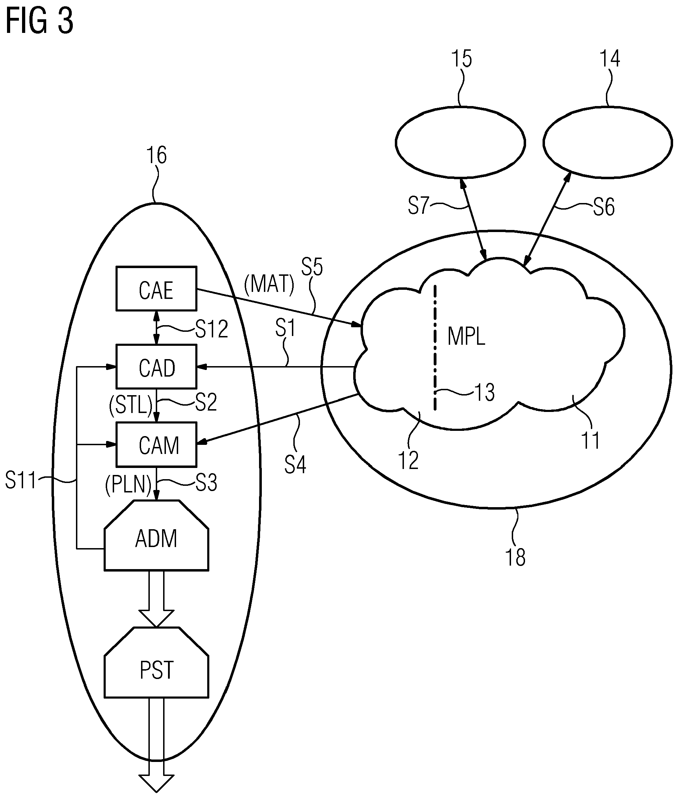

In Figur 3 ist eine Konfiguration dargestellt, bei der der Anwender 16 die Planung und die Produktion der Werkstücke im eigenen Hause betreibt. Dieser bedient sich in diesem Fall lediglich des Materialdatenpools MPL, welcher von dem Serviceanbieter 18 betrieben wird. Im Konstruktionsprogramm CAD wird unter Einsatz der Materialdatensätze MAT, Fertigungsparameter PRT und Maschinentypen MTP (nicht näher dargestellt, vgl. Figur 1), die über die erste Schnittstelle S1 zur Verfügung gestellt werden, der Geometriedatensatz STL erzeugt und über die zweite Schnittstelle S2 an das Fertigungsplanungsprogramm CAM übergeben. Dieses übergibt den Ablaufplan PLN über die dritte Schnittstelle S3 an die additive Fertigungsmaschine ADM oder die Nachbehandlungsanlage PST. Das Werkstück kann dann durch den Anwender 16 an den Kunden geliefert werden.

Sollte der Materialdatenpool MPL keine geeigneten Materialdatensätze für den Anwender 16 zur Verfügung stellen, kann er auch über das Simulationsprogramm CAE neue Materialdatensätze MAT erzeugen und über die fünfte Schnittstelle S5 in den Materialdatenpool MPL einstellen. Dabei können der Anwender 16, der Serviceanbieter 18, die Anlagenhersteller 14 sowie die Materialhersteller 15 im Dialog bleiben. Ob die Daten in dem Bereich 11 mit freien Zugang für alle Nutzer oder dem zugangsbeschränkten Bereich 12 abgelegt werden, ist in Figur 3 (und auch in Figur 2) nicht näher dargestellt.

## Patentansprüche

1. Verfahren zum Erstellen eines Geometriedatensatzes (STL) für ein additiv herzustellendes Werkstück, bei dem ein Konstruktionsprogramm (CAD) zum Einsatz kommt, **dadurch gekennzeichnet,**
**dass** das Konstruktionsprogramm
• über eine erste Schnittstelle (S1) einen Materialdatensatz (MAT) abruft, der in einem Materialdatenpool (MPL) abgespeichert ist, wobei der Materialdatensatz (MAT) die Eigenschaften des additiv herzustellenden Materials enthält und wobei zur Herstellung dieser Eigenschaften nötige Fertigungsparameter (PRT) mindestens eines additiven Fertigungsprozesses in dem Materialdatenpool (MPL) mit dem Materialdatensatz (MAT) verknüpft sind,
• die Eigenschaften des herzustellenden Materials in dem Geometriedatensatz (STL) einem dreidimensionalen Bereich des Werkstücks zuordnet und
• den Geometriedatensatz (STL) an einer zweiten Schnittstelle (S2) zur Verfügung stellt.

2. Verfahren nach Anspruch 1,
**dadurch gekennzeichnet,**
**dass** der Materialdatensatz als Eigenschaften des herzustellenden Materials mindestens eines der folgenden Kriterien enthält:
• Materialeigenschaften, die sich unterscheiden durch chemische Zusammensetzung und/oder metallurgische Eigenschaften und/oder Polymerisationsgrad,
• Eigenschaften, die auf einer Anordnung des Materials im dreidimensionalen Raum beruhen, sowie die zugehörige Anordnung des Materials,
• lokale Materialveränderungen im Bauteil, die durch einen Gradienten der betreffenden Eigenschaft oder einen diskontinuierlichen Übergang hervorgerufen werden.

3. Verfahren nach einem der voranstehenden Ansprüche, **dadurch gekennzeichnet,**
**dass** die zur Herstellung nötigen Fertigungsparameter (PRT) mit Daten mindestens eines Maschinentyps (MTP), auf dem die Fertigungsparameter (PRT) einstellbar sind, in dem Materialdatenpool (MPL) verknüpft werden.

4. Verfahren nach einem der voranstehenden Ansprüche, **dadurch gekennzeichnet,**
**dass** über die erste Schnittstelle (S1) der Materialdatensatz (MAT) und die Fertigungsparameter (PRT) mindestens eines additiven Fertigungsprozesses aus dem Materialdatenpool (MPL) gemeinsam abgerufen werden.

5. Verfahren zum Erstellen eines Ablaufplans (PLN) für die additive Herstellung eines Werkstücks, enthaltend einen Werkstücklagen definierenden Fertigungsdatensatz (CLI) und zur Herstellung nötige Fertigungsparameter (PRT),
**dadurch gekennzeichnet,**
**dass**
• das Verfahren zum Erstellen eines Geometriedatensatzes (STL) für ein additiv herzustellendes Werkstück gemäß einem der voranstehenden Ansprüche verwendet wird,
• der Geometriedatensatz (STL) über die zweite Schnittstelle (S2) an ein Fertigungsplanungsprogramm (CAM) übertragen wird und der Ablaufplan (PLN) durch das Fertigungsplanungsprogram (CAM) erstellt wird,
• der Ablaufplan (PLN) an einer dritten Schnittstelle (S3) zur Verfügung gestellt wird.

6. Verfahren nach Anspruch 5,
**dadurch gekennzeichnet,**
**dass** das Fertigungsplanungsprogramm (CAM) über eine vierte Schnittstelle (S4) Fertigungsparameter (PRT) zur Herstellung des Werkstücks (PRT) von dem Materialdatenpool (MPL) bezieht und bei der Erstellung des Ablaufplanes (PLN) berücksichtigt.

7. Verfahren nach Anspruch 6,
**dadurch gekennzeichnet,**
**dass** die Fertigungsparameter (PRT) mit Daten mindestens eines Maschinentyps (MTP), auf dem die Fertigungsparameter (PRT) einstellbar sind, in dem Materialdatenpool (MPL) verknüpft sind.

8. Verfahren nach einem der Ansprüche 5 bis 7, **dadurch gekennzeichnet,**
**dass** der Ablaufplan (PLN) auch Fertigungsparameter (PRT) für eine dem additiven Verfahren nachgelagerte Nachbehandlung (PST) enthält.

9. Computerprogrammprodukt mit einem ersten Programmmodul mit einem Konstruktionsprogramm (CAD) zum Erstellen eines Geometriedatensatzes (STL) für ein additiv herzustellendes Werkstück,
**dadurch gekennzeichnet,**
**dass** das erste Programmmodul
• eine erste Schnittstelle (S1) zur Eingabe eines Materialdatensatz (MAT) aufweist, wobei der Materialdatensatz (MAT) die Eigenschaften des additiv herzustellenden Materials aufweist, und
• eine zweite Schnittstelle (S2) zur Ausgabe des Geometriedatensatz (STL) aufweist,
wobei mit dem Konstruktionsprogramm (CAD) die Eigenschaften des herzustellenden Materials in dem Geometriedatensatz (STL) einem dreidimensionalen Bereich des Werkstücks zuordenbar sind.

10. Computerprogrammprodukt nach Anspruch 9,
**dadurch gekennzeichnet,**
**dass** die erste Schnittstelle (S1) auch zur Eingabe von für die Herstellung des Werkstücks nötigen Fertigungsparametern (PRT) vorgesehen ist.

11. Computerprogrammprodukt nach einem der Ansprüche 9 oder 10,
**dadurch gekennzeichnet,**
**dass** ein zweites Programmmodul mit einem Fertigungsplanungsprogramm (CAM) vorgesehen ist, mit dem ein Ablaufplan (PLN) für die additive Herstellung eines Werkstücks, enthaltend einen Werkstücklagen definierenden Fertigungsdatensatz (CLI) und zur Herstellung nötige Fertigungsparameter (PRT), erstellbar ist, wobei das zweite Programmmodul
• über die zweite Schnittstelle (S2) mit dem ersten Programmmodul verbunden ist und
• eine dritte Schnittstelle (S3) zur Ausgabe des Ablaufplans (PLN) aufweist.

12. Computerprogrammprodukt nach Anspruch 11,
**dadurch gekennzeichnet,**
**dass** im zweiten Programmmodul eine vierte Schnittstelle (S4) zur Eingabe von für die Herstellung des Werkstücks nötigen Fertigungsparametern (PRT) vorgesehen ist.

13. Datennetzwerk mit einem Computer (CP1) und einem über eine erste Schnittstelle (S1) mit dem Computer (CP1) verbundenen Datenpool,
**dadurch gekennzeichnet,**
**dass**
• auf dem Computer (CP1) ein Computerprogrammprodukt gemäß einem der Ansprüche 9 bis 12 installiert ist,
• der Datenpool als Materialdatenpool (MPL) mit Materialdatensätzen (MAT) ausgeführt ist, wobei die Materialdatensätze (MAT) die Eigenschaften von additiv herzustellenden Materialen enthalten und wobei zur Herstellung dieser Eigenschaften nötige Fertigungsparameter (PRT) von additiven Fertigungsprozessen in dem Materialdatenpool (MPL) mit den Materialdatensätzen (MAT) verknüpft sind, und
• der Computer (CP1) und der Materialdatenpool (MPL) über die erste Schnittstelle (S1) miteinander verbunden sind.

14. Datennetzwerk nach Anspruch 13,
**dadurch gekennzeichnet,**
**dass** der Materialdatenpool (MPL) über eine fünfte Schnittstelle (S5) mit einem dritten Programmmodul (P3) mit einem Simulationsprogramm (CAE) verbunden ist, wobei mit dem Simulationsprogramm (CAE) die Eigenschaften von Materialdatensätzen oder von im Konstruktionsprogramm (CAD) erstellten Bauteilen simulierbar sind.

15. Datennetzwerk nach einem der Ansprüche 13 oder 14, **dadurch gekennzeichnet,**
**dass** der Materialdatenpool (MPL) eine sechste Schnittstelle (S6) für Daten von Maschinentypen (MTP) aufweist.

16. Datennetzwerk nach einem der Ansprüche 13 bis 15, **dadurch gekennzeichnet,**
**dass** der Materialdatenpool (MPL) eine siebente Schnittstelle (S7) für Materialdatensätze (MAT) aufweist.

17. Datennetzwerk nach einem der Ansprüche 13 bis 16, **dadurch gekennzeichnet,**
**dass** der Materialdatenpool (MPL) einen für alle vorgesehenen Nutzer frei zugänglichen Bereich (11) für Daten und einen Bereich (12) mit vergebbaren Zugangsrechten für Daten aufweist.
